(19) Europäisches Patentamt

European Patent Office

Office européen des brevets

(11) **EP 0 739 946 B1**

(12) **EUROPÄISCHE PATENTSCHRIFT**

(45) Veröffentlichungstag und Bekanntmachung des Hinweises auf die Patenterteilung:
**15.05.2002   Patentblatt 2002/20**

(51) Int Cl.$^7$: **C08L 75/04**, C08G 18/08

(21) Anmeldenummer: **96105669.4**

(22) Anmeldetag: **11.04.1996**

(54) **Verfahren zur Herstellung von TPU-Copolymerisat-Mischungen**

Preparation process for TPU-copolymer mixtures

Procédé de préparation de mélanges de copolymère et polyuréthane thermoplastiques

(84) Benannte Vertragsstaaten:
**AT BE CH DE ES FR GB IT LI NL**

(30) Priorität: **24.04.1995   DE 19514947**

(43) Veröffentlichungstag der Anmeldung:
**30.10.1996   Patentblatt 1996/44**

(73) Patentinhaber: **BAYER AG**
**51368 Leverkusen (DE)**

(72) Erfinder:
• **Heidingsfeld, Herbert**
  **50226 Frechen (DE)**
• **Meister, Willi, Dr.**
  **41539 Dormagen (DE)**

• **Schulte, Bernhard, Dr.**
  **47803 Krefeld (DE)**
• **Bräuer, Wolfgang, Dr.**
  **51375 Leverkusen (DE)**
• **Müller, Friedemann, Dr.**
  **41470 Neuss (DE)**
• **Hoppe, Hans-Georg**
  **42799 Leichlingen (DE)**
• **Wussow, Hans-Georg, Dr.**
  **40597 Düsseldorf (DE)**
• **Winkler, Jürgen**
  **40764 Langenfeld (DE)**

(56) Entgegenhaltungen:
**EP-A- 0 012 413          EP-A- 0 012 414**
**EP-A- 0 418 686          DE-A- 4 113 891**

**Beschreibung**

Die Erfindung betrifft ein verbessertes Verfahren zur Herstellung von thermoplastischen Polymergemischen, in dem man in einem Extruder ein vorgefertigtes Copolymerisat mit mindestens einem der Polyurethan-bildenden Ausgangskomponenten mischt und danach die restlichen Reaktionskomponenten dosiert

Thermoplastische Polyurethan-Elastomere (TPU) sind seit langem bekannt. Sie sind von technischer Bedeutung aufgrund der Kombination hochwertiger mechanischer Eigenschaften mit den bekannten Vorteilen der kostengünstigen thermoplastischen Verarbeitbarkeit. Durch die Verwendung unterschiedlicher chemischer Aufbaukomponenten läßt sich eine große Variationsbreite mechanischer Eigenschaften erzielen. Eine Übersicht über TPU, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben

TPU werden aus linearen Polyolen, meist Polyester oder Polyether, organischen Diisocyanaten und kurzkettigen Diolen (Kettenverlängerer) aufgebaut. Zusätzlich können nach dem Stand der Technik Katalysatoren zur Beschleunigung der Reaktivität der Aufbaustoffe zugesetzt werden.

Zur Einstellung der Eigenschaften können die Aufbaukomponenten in relativ breiten molaren Verhältnissen variiert werden. Bewährt haben sich molare Verhältnisse von Polyolen zu Kettenverlängerern von 1:1 bis 1:12. Hierdurch ergeben sich Produkte im Bereich von 80 Shore A bis 75 Shore D.

Der Aufbau der thermoplastisch verarbeitbaren Polyurethanelastomeren kann entweder schrittweise (Prepolymerverfahren) oder durch die gleichzeitige Reaktion aller Komponenten in einer Stufe erfolgen (one shot). Beim Prepolymerverfahren wird aus dem Polyol und dem Diisocyanat ein isocyanathaltiges Prepolymer gebildet, das in einem zweiten Schritt mit dem Kettenverlängerer umgesetzt wird.

Die TPU können kontinuierlich oder diskontinuierlich hergestellt werden. Als die bekanntesten technischen Herstellverfahren werden das sogenannte Bandverfahren und das Extruderverfahren genutzt.

Durch Mischungen mit Polymerisaten können die vorteilhaften TPU-Eigenschaften mit denen der Polymerisate kombiniert werden. Insbesondere Mischungen mit Pfropfkautschuken verbessern die Kälteeigenschaften der TPU. In der USA 4 317 890 ist eine TPU/ABS-Mischung beschrieben. Die erhaltenen Formmassen zeigen aber bei tiefen Temperaturen eine unbefriedigende Schlagzähigkeit und sind nicht frei von Segregationserscheinungen, dem sogenannten Perlmutteffekt. Der Einsatz von TPU niedriger Dichte (EP-A 0 152 049) oder die Zugabe von Verarbeitungshilfsmitteln (Polyacrylate in US-A 4 179 479, Styrol-MSA-Copolymerisate in EP-A 0 443 432) bringt keine entscheidende Verbesserung der Dispergierung, was sich insbesondere durch eine mäßige Kälteschlagzähigkeit bemerkbar macht.

Ein anderer Weg wird in der DE-OS 28 54 409 (US-A 4 342 847) beschrieben. Die TPU-Polymerisat-Mischungen werden in einem Extruder-Reaktionsverfahren durch die Zudosierung aller TPU-Rohstoffe zu dem vorgefertigten und vorher im Extruder aufgeschmolzenen Polymerisat hergestellt. Die so hergestellten Mischungen zeigen ein verbessertes Kälteverhalten. Nachteile sind aber die benötigten hohen Aufschmelztemperaturen für das Copolymerisat, die zu thermischen Produktschädigungen führen, oder die bei niedrigeren Aufschmelztemperaturen auftretenden Friktionen, die ebenfalls zu einer Produktschädigung führen. Zusätzlich kommt es in einem kontinuierlichen Prozeß bei den für eine Mischphase einer TPU-Reaktion üblichen niedrigen Temperaturen (100° bis 200°C) zu Viskositätsschwankungen der Copolymerisatschmelze auf hohem Niveau, die Druckschwankungen bei der TPU-Monomer-Dosierung verursachen. Dieses erlaubt in einem kontinuierlichen Prozeß keine längere gleichmäßige Dosierung der TPU-Komponenten, was zu Inhomogenitäten im Produkt bzw. sogar zum Abbruch des Konti-Prozesses führen kann.

Bis heute ist es also nicht gelungen, TPU-Copolymerisat-Mischungen mit guten mechanischen und elastischen Eigenschaften, insbesondere in der Kälte, in einem kontinuierlichen Prozeß längere Zeit ohne Unterbrechung herzustellen.

Der Erfindung liegt die Erkenntnis zugrunde, daß einwandfreie TPU-Copolymerisat-Mischungen nur bei einer optimalen Dispergierung der beiden Thermoplasten erhalten werden Dies wird durch ein Anlösen des Copolymerisates in einem der TPU-Ausgangsprodukte erreicht.

Gegenstand der Erfindung ist ein Verfahren zur kontinuierlichen Herstellung einer TPU-Copolymerisat-Mischung, aus

I. 1 bis 60 Gew.-% bezogen auf Gesamtmischung eines thermoplastischen (Co)polymerisats und

II. 99 bis 40 Gew.-% der polyurethanbildenden Komponenten

A) organisches Diisocyanat

B) lineares hydroxylterminiertes Polyol mit Molekulargewicht 500 bis 5000

C) Diol- oder Diamin-Kettenverlängerer mit Molekulargewicht 60 bis 500,

wobei man I. zusammen mit einem Teil der Komponenten A), B) und/oder C) über eine erste Einspeisungsstelle in einen Extruder einbringt und den Rest der Komponenten A), B) und/oder C) über eine oder mehrere nachfolgende Einspeisungsstellen in den Extruder zudosiert und A), B) und C) bei einem Molverhältnis der NCO-Gruppen in A) zu den gegenüber Isocyanat reaktiven Gruppen in B) und C) von 0,9 bis 1,2 zum TPU umsetzt und nach Beendigung der Reaktion die TPU-Copolymerisat-Mischung aus dem Extruder entnimmt.

Die erfindungsgemäßen TPU-Copolymerisat-Mischungen enthalten somit thermoplastisch verarbeitbare Polyurethane, die aus organischen Diisocyanaten, Polyolen und Kettenverlangerungsmitteln aufgebaut sind.

Als organische Diisocyanate (A) kommen beispielsweise aliphatische, cycloaliphatische, araliphatische, heterocyclische und aromatische Diisocyanate in Betracht, wie sie z.B. in Justus Liebigs Annalen der Chemie, 562, Seiten 75 bis 136, beschrieben werden.

Im einzelnen seien beispielhaft genannt: aliphatische Diisocyanate, wie Hexamethylendiisocyanat, cycloaliphatische Diisocyanate, wie Isophorondiisocyanat, 1,4-Cyclohexandiisocyanat, 1-Methyl-2,4- und -2,6-cyclohexandiisocyanat sowie die entsprechenden Isomerengemische, 4,4'-, 2,4'- und 2,2'-Dicyclohexylmethandiisocyanat sowie die entsprechenden Isomerengemische und aromatische Diisocyanate, wie 2,4-Toluylendiisocyanat, Gemische aus 2,4- und 2,6-Toluylendiisocyanat, 4,4'-, 2,4'- und 2,2'-Diphenylmethandiisocyanat, Gemische aus 2,4'- und 4,4'-Diphenylmethandiisocyanat, urethanmodifizierte flüssige 4,4'- und/oder 2,4'-Diphenylmethandiisocyanate, 4,4'-Diisocyanatodiphenylethan-( 1,2) und 1,5-Naphthylendiisocyanat. Vorzugsweise verwendet werden 1,6-Hexamethylendiisocyanat, Isophorondiisocyanat, Dicyclohexylmethandiisocyanat, Diphenylmethandiisocyanat-Isomerengemische mit einem 4,4'-Diphenylmethandiisocyanatgehalt von größer als 96 Gew.-% und insbesondere 4,4'-Diphenylmethandiisocyanat und 1,5-Naphthylendiisocyanat.

Die genannten Diisocyanate können zusammen mit bis zu 15 Gew.-% (berechnet auf Diisocyanat), aber höchstens soviel eines Polyisocyanates, daß ein unvernetztes Produkt entsteht, verwendet werden. Beispiele sind Triphenylmethan-4,4',4"-triisocyanat und Polyphenyl-polymethylen-polyisocyanate.

Die Diisocyanate können einzeln oder in Form von Mischungen untereinander zur Anwendung kommen.

Als Komponente B) werden lineare hydroxylterminierte Polyole mit einem mittleren Molekulargewicht $\bar{M}_n$ 500 bis 5000 verwendet. Diese enthalten kleine Anteile an produktionsbedingt oft verzweigten Produkten. Deshalb werden sie häufig als "im wesentlichen lineare" Polyole bezeichnet.

Bevorzugte Polyole (B) sind Polyester-, Polyether-, Polycarbonat-Diole oder Gemische aus diesen.

Geeignete Polyether-Diole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden Als Startermoleküle kommen beispielsweise in Betracht: Wasser, Aminoalkohole, wie N-Alkyl-diethanolamine, beispielsweise N-Methyldiethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyether-Diole sind ferner die hydroxylgruppenhaltigen Polymerisationsprodukte des Tetrahydrofurans. Die erfindungsgemäßen Polyether-Diole können sowohl einzeln als auch in Form von Mischungen untereinander zur Anwendung kommen.

Es können auch trifunktionelle Polyether in Anteilen von 0 bis 30 Gew.-% bezogen auf die bifunktionellen Polyether eingesetzt werden.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren wie Phthalsäure, Isophthalsäure und Terephthalsäure. Die Dicarbonsäuren können einzeln oder als Gemische, z.B. in Form einer Bernstein-, Glutar- und Adipinsäuremischung verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischung untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyester-Diole vorzugsweise verwendet werden Ethandiol-polyadipate, 1,4-Butandiol-polyadipate, Ethandiol-butandiol-1,4-polyadipate, 1,6-Hexandiolneopentylglykol-polyadipate, 1,6-Hexandiol-1,4-butandiol-polyadipate und Polycaprolactone.

Die Polyester-Diole besitzen mittlere Molekulargewichte $\overline{M}_n$ von 500 bis 5000 und können einzeln oder in Form von Mischungen untereinander zur Anwendung kommen.

Als Kettenverlängerungsmittel mit Molekulargewichten von 60 bis 500 kommen beispielsweise aliphatische Diole mit 2 bis 14 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4--Di(β-hydroxyethyl)-hydrochinon, (cyclo)aliphatische Diamine, wie z.B. Isophorondiamin, Ethylendiamin, 1,2-, 1,3-Propylen-diamin, N-Methyl-propylendiamin-1,3, N,N'-Dimethyl-ethylen-diamin und aromatische Diamine, wie z.B. 2,4- und 2,6-Toluylen-diamin, 3,5-Diethyl-2,4- und/oder -2,6-toluylen-diamin und primäre ortho-di-, tri- und/oder tetraalkylsubstituierte 4,4'-Diaminodiphenylmethane. Es können auch Gemische der obengenannten Kettenverlängerer eingesetzt werden. Daneben können auch kleinere Mengen an Triolen verwendet werden.

Weiterhin können in geringen Mengen auch übliche monofunktionelle Verbindungen, z.B. als Kettenabbrecher oder Entformungshilfen, eingesetzt werden. Beispielhaft genannt seien Alkohole wie Octanol und Stearylalkohol oder Amine wie Butylamin und Stearylamin.

Zur Herstellung der TPU können die Aufbaukomponenten, gegebenenfalls in Gegenwart von Katalysatoren, Hilfsmitteln und/oder Zusatzstoffen in solchen Mengen zur Reaktion gebracht werden, daß das Äquivalenzverhältnis von NCO-Gruppen zur Summe der NCO-reaktiven Gruppen, insbesondere der OH-Gruppen der niedermolekularen Diole/Triole und Polyole 0,9:1,0 bis 1,2:1,0, vorzugsweise 0,95:1,0 bis 1,10:1,0 beträgt.

Geeignete erfindungsgemäße Katalysatoren sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und/oder Zinnverbindungen.

Neben Katalysatoren können den Aufbaukomponenten auch Hilfsmittel und/oder Zusatzstoffe einverleibt werden. Genannt seien beispielsweise Gleitmittel, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel.

Verstärkungsmittel sind insbesondere faserartige Verstärkungsstoffe wie z.B. anorganische Fasern, die nach dem Stand der Technik hergestellt werden und auch mit einer Schlichte beaufschlagt sein können.

Nähere Angaben über die obengenannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 oder der DE-OS 29 01 774 zu entnehmen.

Im erfindungsgemäßen Verfahren können die verschiedenen vorgefertigten Copolymerisate I eingesetzt werden. In Frage kommen beispielsweise thermoplastische Polyurethane, welche nach dem Stand der Technik hergestellt wurden.

Erfindungsgemäß geeignete thermoplastische Copolymerisate sind auch die an sich bekannten ABS-Kunststoffe. Hierbei handelt es sich um elastisch-thermoplastische Zweiphasen-Kunststoffe, welche im wesentlichen aus Acrylnitril (A), Butadien (B) und Styrol bzw. α-Methylstyrol (S) aufgebaut sind. B kann ganz oder teilweise durch eine andere Kautschukkomponente ersetzt werden, z.B. durch EPDM-Kautschuk (sogenannte AES-Polymerisate) oder Acrylesterkautschuk. Diese Polymerisate enthalten eine kontinuierliche Phase aus einem thermoplastischen Harz (z B. Styrol/Acrylnitril-Copolymerisat SAN) und eine diskontinuierliche Kautschukphase aus kleinen Kautschukteilchen, die meist als Pfropfpolymerisat von Styrol und Acrylnitril auf dem Kautschuk vorliegen. Diese Polymerisate werden in an sich bekannter Weise durch Emulsions-, Suspensions-, Masse- und Lösungspolymerisation bzw. Kombinationen dieser Verfahren hergestellt, wie es z.B. von C.H. Basdekis in "ABS-Plastics", Reinhold Publishing Corporation, New York, 1964, beschrieben wird. Bevorzugt werden durch Emulsions- oder Massepolymerisation hergestellte Polymerisate verwendet.

Ebenfalls geeignet sind Polyethylen und Polypropylen, Copolymere aus Ethylen und weiteren olefinisch ungesättigten Monomeren, Polybuten-(1), Polymethylpenten, Polystyrol (insbesondere schlagzähes Polystyrol), Polyvinylchlorid, Polymethacrylsäuremethylester, Polycarbonate, Polyamide, aromatische Polyether (z.B. Polyphenylenoxid), Polyester aus Terephthalsäure und gegebenenfalls Isophthalsäure sowie Butylenglykol und/oder Ethylenglykol, Polyether-Weichsegmente enthaltendes Polybutylenglykolterephthalat, Celluloseester (z.B. Celluloseacetat, - propionat und -acetobutyrat), Styrol-Butadien-(Pfropf)-copolymerisate (gegebenenfalls in Abmischung mit weiteren Polymerisaten), sowie Polypropylen und Ethylen-Propylen-Copolymere in Abmischung mit EPM und/oder EPDM-Kautschuken, Ethylen/Vinylacetatcopolymere. Polymerisate dieser Art werden z.B. von Vieweg et al. im Kunststoff-Handbuch, Bd. II-VII, IX und XI, Carl Hanser Verlag München, 1963-1992 und von Hansjürgen Sächtling im "Kunststofftaschenbuch", 21. Ausgabe, Carl Hanser Verlag, München-Wien, 1979, beschrieben.

Erfindungsgemäß bevorzugte ABS-Polymerisate sind Mischungen aus

a) 5 bis 70 Gew.-% eines oder mehrerer Pfropfprodukte und

b) 95 bis 30 Gew.-% eines oder mehrerer thermoplastischer Harze.

Pfropfprodukte a) sind bevorzugt Polymerisate, die durch Polymerisation von Pfropfmonomeren in Anwesenheit eines Kautschuks als Pfropfbasis erhalten werden. Der Kautschukanteil beträgt dabei ca. 5 bis 80 Gew.-% und wird durch das Polymerisationsverfahren mitbestimmt.

Als Pfropfbasis kommen insbesondere Polybutadien-, Butadien/Acrylnitril- und Butadien/Styrol-Polymerisate sowie Butadien-Styrol-Blockpolymerisate in Betracht. Pfropfmonomere sind hauptsächlich Styrol, Gemische aus Styrol und Acrylnitril, bevorzugt im Gewichtsverhältnis 90:10 bis 50:50, Gemische aus Styrol und Methylmethacrylat, bevorzugt im Gewichtsverhältnis 5:95 bis 95:5, sowie Styrol-Acrylnitril-Methylmethacrylat-Gemische.

Das thermoplastische Harz b) bildet die kontinuierliche Phase (Matrix) und ist z.B. ein Polymerisat oder Copolymerisat von Styrol, $\alpha$-Methylstyrol, Acrylnitril, Methylmethacrylat und Maleinsäureanhydrid. Bevorzugt sind Polystyrol, Styrol-Acrylnitril-Copolymerisat mit einem Acrylnitril-Gehalt von 20 bis 35 Gew.-% sowie $\alpha$-Methylstyrol-Acrylnitril-Copolymere mit einem Acrylnitril-Gehalt von 21 bis 31 Gew.-%. Das Gewichtsmittel des Molekulargewichts dieser Harze ist meist 50 000 bis 550 000. Die molekulare Uneinheitlichkeit, ausgedrückt durch den Wert $(M_W/M_N)-1 = U_n$ ist 1,0 bis 3,5.

Gegebenenfalls kann erfindungsgemäß jedoch die Komponente a) allein als Thermoplast eingesetzt werden.

Weiterhin sind bevorzugt die nach dem bekannten Masse-Verfahren hergestellten ABS-Polymerisate.

Das thermoplastische (Co)polymerisat I und speziell das ABS wird vorzugsweise in einer Menge von 1 bis 60 Gew.-%, besonders bevorzugt 3 bis 25 Gew.-%, bezogen auf gesamtes Verfahrensprodukt, angewandt.

Das erfindungsgemäße Verfahren wird wie folgt ausgeführt:

Die TPU werden kontinuierlich im sogenannten Extruderverfahren, z.B. in einem Mehrwellenextruder, in Gegenwart des (Co)polymerisates hergestellt. Dabei wird das (Co)polymerisat und mindestens eine der TPU-Komponenten A) oder B) oder C) oder Mischungen bzw. Teilmengen davon, bevorzugt mindestens 3 Gew.-%, bezogen auf die Menge an (Co)poymerisat, über eine erste Einspeisungsstelle in den Extruder eindosiert. Entweder wird also das (Co)polymerisat im organischen Diisocyanat oder in einer OH-Komponente angelöst, bevor durch die Zugabe der restlichen Monomeren, einzeln oder vorgemischt, in nachfolgende Einspeisungsstellen die TPU-Reaktion gestartet wird. Es kann aber auch die Mischung der OH-Komponenten, das Diol und das Polyol, zum Anlösen verwendet werden.

Bevorzugt dosiert man das (Co)polymerisat und den Kettenverlängerer C) oder das Diisocyanat A) oder Teilmengen davon über eine erste Einspeisstelle in den Extruder, die jeweils restlichen TPU-Komponenten in eine oder mehrere nachfolgende Einspeisstellen.

In einer besonderen Ausführungsform kann die Dosierung der TPU-Komponenten nach einem an sich bekannten Prepolymer-Verfahren erfolgen. Dabei kann das Prepolymer sowohl batchweise vorgelegt, als auch kontinuierlich in einem Teil des Extruders oder in einem separaten vorgeschalteten Prepolymeraggregat hergestellt werden. Das (Co)polymerisat kann dann entweder im Diisocyanat-haltigen Prepolymer angelöst werden bei nachfolgender Dosierung des Kettenverlängerers oder es wird zusammen mit dem Kettenverlängerer dosiert bei nachfolgender Prepolymerzugabe.

Das erfindungsgemäße kontinuierliche Verfahren läßt sich lange Zeit ohne jegliche Schwankungen durchführen und führt zu homogenen farbhellen Produkten, die aufgrund ihres hervorragenden Aufschmelzverhaltens ein gutes Verarbeitungsverhalten besitzen. Sie haben gute mechanische und elastische Eigenschaften und eine große Schlagzähigkeit bei hoher Steifigkeit, insbesondere in der Kälte. Damit finden sie vorzugsweise Verwendung zur Herstellung von Spritzgießartikeln, wie z.B. Formkörper für Automobile und für den Schuhbereich, insbesondere Skischuhe.

## Beispiele

**Beispiel 1** nicht erfindungsgemäßes Vergleichsbeispiel

Die Herstellung der TPU/ABS-Mischung erfolgt kontinuierlich in einer ZSK 120 der Firma Werner/Pfleiderer. Die Gehäusetemperaturen der 13 Gehäuse liegen bei 160°C bis 220°C. Die Drehzahl der Schnecke ist auf 300 U/min eingestellt.

Es werden 28 Gew.-Teile eines handelsüblichen Emulsions-ABS aus 17 % Acrylnitril, 53 % Styrol und 30 % Butadien, 102 Gew.-Teile Diphenylmethandiisocyanat (MDI-flüssig, 50°C), ein auf 190°C erhitztes Gemisch von 100 Gew.-Teile eines Poly-butandiol-1,4-adipates mit einem Molekulargewicht von ca. 2250, 1,0 Gew.-Teile 2,2'-6,6'-Tetraisopropyldiphenylcarbodiimid, 1,50 Gew.-Teile Hexandiol und 10 ppm Tetrabutyltitanat sowie 31 Gew.-Teile Butandiol nach Maßgabe der Tabelle dosiert. In das erste Gehäuse werden zusätzlich 1,5 Gew.-Teile Bis-ethylen-stearylamid gegeben. Die Gesamtdosierung beträgt 1200 kg/h.

Die TPU-ABS-Mischung wird als Schmelzestrang extrudiert, im Wasser abgekühlt und granuliert.

**Beispiel 2**

Das Beispiel wird analog Beispiel 1 mit der in der Tabelle angeführten geänderten Dosierreihenfolge durchgeführt

**Beispiel 3**

Das Beispiel wird analog Beispiel 1 mit der in der Tabelle angeführten geänderten Dosierreihenfolge durchgeführt.

Die wichtigsten Eigenschaften der in den Beispielen hergestellten Produkte sind in folgender Tabelle angegeben.

## Tabelle

| Beispiel | Dosierung | | | | Harte DIN 53 505 | MVR ISO 1133 | | | TPU-ABS Schlagzug (-20°C) DIN 53 48 8488 | Bruchspannung DIN 53 504 | Druckschwankung Komp. Dosierung |
|---|---|---|---|---|---|---|---|---|---|---|---|
| | ABS | Polyol Mischg | Diol | MDI | | 200°C | 205° C | 210°C | Dehnung % | MPA | |
| | Geh | Geh | Geh. | Geh | Shore D | | | | | | |
| 1* | 1 | 3 | 3 | 3 | 57 | / | 12.3 | 35.7 | 64 | 63 4 | stark, Prozeßabbruch nach 6 h |
| 2 | 1 | 3 | 3 | 1 | 58 | 0 6 | 15 3 | 40.9 | 62 | 62.2 | keine |
| 3 | 1 | 3 | 1 | 3 | 57 | 0.7 | 16.1 | 40.0 | 56 | 62.5 | keine |

Geh. = Gehäuse

Diol = Butandiol/Hexandiol

* nicht erfindungsgemäß

Man erkennt deutlich, daß es bei dem Standard-Verfahren nach DE-OS 28 54 409, bei dem das Copolymerisat nur thermisch aufgeschmolzen wird, zu starken Druckschwankungen kommt, die nach 6 h zum erzwungenen Abbruch führten.

Dagegen ist bei den erfindungsgemäßen Beispielen durch das Anlösen des Copolymerisates mit Hilfe eines der TPU-Monomeren das Aufschmelzen und die Dispergierung des Copolymerisates so erleichtert worden, daß man lange Zeit (>>48 h) ohne jegliche Druckschwankungen gleichmäßig die Monomeren dosieren kann und so ein homogenes Produkt erhält.

Dieses nach dem erfindungsgemäßen Verfahren hergestellte Produkt ist farbhell und hat niedrigere Aufschmelztemperaturen. Hinzu kommen sehr gute Kälteeigenschaften.

**Patentansprüche**

1. Verfahren zur kontinuierlichen Herstellung einer TPU-Copolymerisat-Mischung, aus

    I. 1 bis 60 Gew.-% bezogen auf Gesamtmischung eines thermoplastischen Copolymerisats und

    II. 99 bis 40 Gew.-% der polyurethanbildenden Komponenten

        A) organisches Diisocyanat

        B) lineares hydroxylterminiertes Polyol mit Molekulargewicht 500 bis 5000

        C) Diol- oder Diamin-Kettenverlängerer mit Molekulargewicht 60 bis 500,

    wobei man I. zusammen mit einem Teil der Komponenten A), B) und/oder C) über eine erste Einspeisungsstelle in einen Extruder einbringt und den Rest der Komponenten A), B) und/oder C) über eine oder mehrere nachfolgende Einspeisungsstellen in den Extruder zudosiert und A), B) und C) bei einem Molverhältnis der NCO-Gruppen in A) zu den gegenüber Isocyanat reaktiven Gruppen in B) und C) von 0,9 bis 1,2 zum TPU umsetzt und nach Beendigung der Reaktion die TPU-Copolymerisat-Mischung aus dem Extruder entnimmt.

2. Verfahren nach Anspruch 1, worin man als thermoplastisches Copolymerisat 3 bis 25 Gew.-%, bezogen auf die Gesamtmischung, eines ABS-Polymeren einsetzt.

3. Verfahren nach Anspruch 2, worin man die Komponente C) und das ABS-Polymer in eine erste Einspeisungsstelle einbringt und die Komponenten A) und B) in eine oder mehrere nachfolgende Einspeisungsstellen dosiert.

4. Verfahren nach Anspruch 2, worin man die Komponente A) und das ABS-Polymer in eine erste Einspeisungsstelle einbringt und die Komponenten B) und C) in eine oder mehrere nachfolgende Einspeisungsstellen dosiert.

**Claims**

1. A process for the continuous production of a TPU-copolymer mixture from

    I. 1 to 60 % by weight, with respect to the total mixture, of a thermoplastic copolymer, and

    II. 99 to 40 % by weight of the polyurethane-forming components comprising

        A) an organic diisocyanate

        B) a linear polyol with terminal hydroxyl groups and with a molecular weight of 500 to 5000

        C) a diol- or diamine chain extender with a molecular weight of 60 to 500,

    wherein I., together with part of components A), B) and/or C), is introduced via a first feed point into an extruder, and the remainder of components A), B) and/or C) is metered into the extruder via one or more subsequent feed points, and A), B) and C) are reacted to form the TPU at a molar ratio of the NCO groups in A) to the groups in B) and C) which react with isocyanate of 0.9 to 1.2, and after the reaction is complete the TPU-copolymer mixture is removed from the extruder.

2. A process according to claim 1, wherein 3 to 25 % by weight, with respect to the total mixture, of an ABS polymer is used as a thermoplastic copolymer.

3. A process according to claim 2, wherein component C) and the ABS polymer are introduced into a first feed point and components A) and B) are metered into one or more subsequent feed points.

4. A process according to claim 2, wherein component A) and the ABS polymer are introduced into a first feed point and components B) and C) are metered into one or more subsequent feed points.

**Revendications**

1. Procédé de préparation en continu d'un mélange TPU-copolymère, constitué de :

I. 1 à 60% en poids sur base du mélange total, d'un copolymère thermoplastique, et
II. 99 à 40% en poids des composants formant le polyuréthanne :

A) diisocyanate organique,
B) polyol linéaire à terminaison hydroxy, avec un poids moléculaire allant de 500 à 5000, et
C) agent d'allongement de chaine diol ou diamine, avec une poids moléculaire allant de 60 à 500,

où on introduit I. avec une partie des composants A), B) et/ou C) en un premier site d'alimentation dans une extrudeuse, le reste des composants A), B) et/ou C) est ajouté en un ou plusieurs sites suivants d'alimentation, A), B) et C) réagissent en TPU dans un rapport molaire des radicaux NCO dans A) aux radicaux réagissant avec les isocyanates dans B) et C) allant de 0,9 à 1,2 et après achèvement de la réaction, le mélange TPU-copolymère est prélevé de l'extrudeuse.

2. Procédé suivant la revendication 1, dans lequel on met en oeuvre comme copolymère thermoplastique, 3 à 25% en poids, sur base du mélange total, d'un polymère ABS.

3. Procédé suivant la revendication 2, dans lequel on introduit le composant C) et le polymère ABS dans une premier site d'alimentation et les composants A) et B) sont ajoutés dans un ou plusieurs sites suivants d'alimentation.

4. Procédé suivant la revendication 2, dans lequel on introduit le composant A) et le polymère ABS dans une premier site d'alimentation et les composants B) et C) sont ajoutés dans un ou plusieurs sites suivants d'alimentation.